# EUROPEAN PATENT APPLICATION

(11) **EP 4 585 309 A1**
(43) Date of publication of application: **16.07.2025**
(21) Application number: 23877639.7
(22) Date of filing: 11.10.2023
(51) Int. Cl.: B03C 1/28

(54) **FILTER APPARATUS**

(30) Priority: 11.10.2022 KR 20220129923
(71) Applicant: LG Energy Solution, Ltd., Seoul 07335 (KR)
(72) Inventor: JEONG, Yu Sang, Daejeon 34122 (KR); HONG, Sang Jin, Daejeon 34122 (KR); KIM, Guk Tae, Daejeon 34122 (KR)
(74) Representative: Plasseraud IP
(86) International application number: PCT/KR2023/015553
(87) International publication number: WO 2024/080712

(57) **Abstract**

The present application relates to a filter device, specifically, a magnetic filter device, and a use thereof. Even when a magnet with a longer length and stronger magnetic force is applied for increasing a processing efficiency of a magnetic filter device and a removal efficiency of foreign substances, the present application can provide a structure of a filter device without damage such as bending of the magnet, and a use thereof. The present application can also provide a structure of a filter device which facilitates regular cleaning or magnet replacement of the filter device while preventing damage such as the bending, and a use thereof.

## Description

### Technical Field

This application claims the benefit of priority based on Korean Patent Application No. 10-2022-0129923 dated October 11, 2022, the disclosure of which is incorporated herein by reference in its entirety.

The present application relates to a filter device.

### Background Art

A so-called magnetic filter device can be used to remove foreign substances from a fluid such as a slurry for electrodes or a fuel.

The slurry for electrodes can be prepared by dispersing components such as electrode active materials in a solvent, where the electrode is manufactured after such a slurry is applied, dried, and rolled on a current collector.

However, in the process of preparing the slurry, foreign substances having magnetism or easily magnetized can be mixed during processes such as grinding, mixing, and/or pressurizing of the active material. If these foreign substances are included in the electrode, problems such as charging or discharging efficiency reduction can be caused.

Therefore, a magnetic filter can be applied to remove such foreign substances.

Such a magnetic filter is typically performed by a method of contacting a fluid such as the slurry with a filter part including a magnet to remove foreign substances.

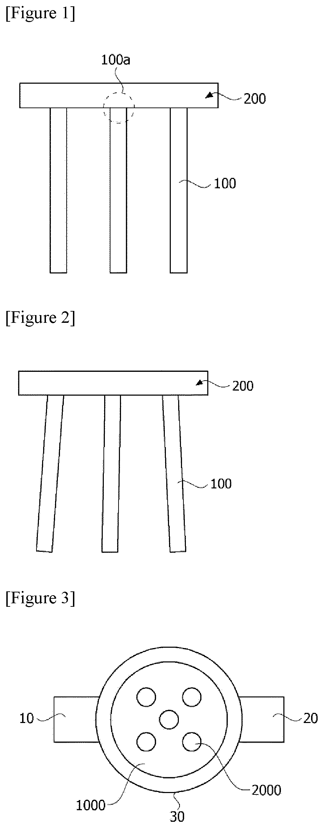

At this time, the filter part has a form in which one end of each of a plurality of rod-shaped magnets (100) is fixed to a lid (200), as illustrated in Figure 1, and generally, while the fluid moves in a direction indicated by an arrow in Figure 1, foreign substances are removed by the magnets (100). One end of the rod-shaped magnets (100) is usually fixed to the lid (200) by welding or bolts, and the like.

Currently, most rod-shaped magnets used in the process are magnets having a length of 100 mm to 150 mm or so and exhibiting a magnetic force of about 10,000 Gauss.

When magnets with a longer length and stronger magnetic force are applied, a larger amount of fluid can be processed efficiently and foreign substances can be removed more efficiently.

However, if the length of the magnet is made longer and the magnetic force is increased, the repulsive or attractive force acting between the magnets becomes stronger, so that for example, as shown in Figure 2, a problem of the rod-shaped magnets (100) being bent occurs.

To solve such a problem, a method of fixing the other end of the rod-shaped magnet (100), which is not fixed by the lid (200), with a fixing means such as the lid (200) can be considered. However, if both ends of the rod-shaped magnets are fixed, there is a problem that it is difficult to perform the rod-shaped magnet replacement or the filter part cleaning.

### Disclosure

### Technical Problem

The present application relates to a filter device, specifically, a magnetic filter device, and a use thereof. Even when a magnet with a longer length and stronger magnetic force is used for increasing a processing efficiency of a magnetic filter device and a removal efficiency of foreign substances, the present application is intended to provide a structure of a filter device without damage such as bending of the magnet, and a use thereof. The present application is also intended to provide a structure of a filter device which facilitates regular cleaning or magnet replacement of the filter device while preventing damage such as the bending, and a use thereof.

### Technical Solution

The present application relates to a filter device, specifically a magnetic filter device.

The filter device may comprise a housing providing a space for removing foreign substances from a fluid, and a filter part present inside the housing.

The filter part may comprise a lid formed to fix a plurality of rod-shaped magnets in a state where they are spaced apart from each other at an interval, a plurality of rod-shaped magnets, each of which has one end fixed to the lid, and a jig mounted on the other end of each of the rod-shaped magnets to maintain an interval between the rod-shaped magnets.

Here, the rod-shaped magnet may be a rod-shaped magnet having a length of 200 mm or more, and/or may be a rod-shaped magnet exhibiting a magnetic force exceeding 10,000 Gauss.

Here, the jig may be a non-metallic jig, and may be mounted on the rod-shaped magnets to be detachable.

Here, the fluid applied to the filter device may be an electrode slurry.

Here, the housing may comprise an inlet through which the fluid is introduced and an outlet through which the fluid is discharged.

Here, the rod-shaped magnet may be a rod-shaped magnet having a length of 200 mm or more and exhibiting a magnetic force exceeding 10,000 Gauss.

Here, the rod-shaped magnet may have a maximum cross-sectional size in a range of 15 mm to 40 mm.

Here, the plurality of rod-shaped magnets may be arranged so that a ratio (D/I) of the maximum cross-sectional size (D) of the rod-shaped magnet to an interval (I) between the rod-shaped magnets is in a range of 1 to 5.

Here, the interval between the rod-shaped magnets may be in a range of 5 mm to 30 mm.

Here, the plurality of rod-shaped magnets may be arranged so that some magnets are arranged at an interval along a first direction, and other magnets are arranged at an interval along a second direction forming an angle in a range of 80 degrees to 100 degrees with the first direction while passing through any one of the rod-shaped magnets arranged at an interval along the first direction.

In the arrangement, the plurality of rod-shaped magnets may be arranged so that the maximum cross-sectional size of the rod-shaped magnets is in the range of 15 mm to 40 mm, and the ratio (D/I) of the maximum cross-sectional size (D) to the interval (I) between the rod-shaped magnets is in the range of 1 to 5.

The jig applied to the filter device may be a plastic jig, for example, a diamagnetic plastic jig.

The jig applied to the filter device may be an acetal jig.

The present application also relates to a method of removing foreign substances from a fluid using the filter device.

The method may comprise a step of contacting the fluid with the rod-shaped magnets of the filter part inside the housing of the filter device.

The present application also relates to a method for manufacturing an electrode using the filter device.

The method may comprise a step of contacting an electrode slurry with the rod-shaped magnets of the filter part inside the housing of the filter device.

The method may further perform a step of coating the electrode slurry after contacting the rod-shaped magnets on a current collector.

### Advantageous Effects

Even when a magnet with a longer length and stronger magnetic force is used for increasing a processing efficiency of a magnetic filter device and a removal efficiency of foreign substances, the present application can provide a structure of a filter device without damage such as bending of the magnet, and a use thereof. The present application can also provide a structure of a filter device which facilitates regular cleaning or magnet replacement of the filter device while preventing damage such as the bending, and a use thereof.

### Description of Drawings

Figures 1 and 2 are exemplary diagrams for explaining a structure and problems of a filter part in a filter device of a conventional art.
Figure 3 is a diagram showing a case where an exemplary filter device of the present application is observed from the top.
Figure 4 is a diagram showing a case where an exemplary filter part of the present application is observed from the side.
Figures 5 and 6 are diagrams showing an exemplary form of a jig in a filter part.

### [Explanation of Reference Numerals]

200, 1000: lid
100, 2000, 2000a, 2000b, 2000c, 2000d, 2000e: rod-shaped magnets
100a: one end of rod-shaped magnet
30: space
10: inlet
20: outlet
3000: jig
3001: frame
3002: connecting portion

### Mode for Invention

This specification describes a filter device.

The filter device of the present application may be used to remove foreign substances from a fluid, and in one example, the foreign substances may be a magnetic material or magnetized material.

The type of fluid applied to the filter device of the present application is not particularly limited if it includes the magnetic material or magnetized material. In one example, the fluid may be a slurry for electrodes.

The slurry for electrodes is usually prepared by dispersing components such as electrode active materials in a solvent. Therefore, the slurry for electrodes may comprise the electrode active material.

The specific type of the electrode active material is not particularly limited, where materials commonly used to form positive or negative electrodes may be used.

For example, a lithium transition metal oxide may be used as the active material used to form a positive electrode. Specifically, a layered compound such as lithium cobalt oxide (LiCoO₂) or lithium nickel oxide (LiNiO₂), or a compound substituted with one or more transition metals; a lithium iron oxide such as LiFe₃O₄; a lithium manganese oxide such as Li_{1+c1}Mn_{2-c1}O₄ (0≤c1≤0.33), LiMnO₃, LiMn₂O₃ or LiMnO₂; a lithium copper oxide (Li₂CuO₂); a vanadium oxide such as LiV₃O₈, V₂O₅, or Cu₂V₂O₇; an Ni site type lithium nickel oxide represented by a formula LiNi_{1-c2}M_{c2}O₂ (where M is at least one selected from the group consisting of Co, Mn, Al, Cu, Fe, Mg, B and Ga, and it satisfies 0.01≤c2≤0.3); a lithium manganese composite oxide represented by a formula LiMn_{2-c3}M_{c3}O₂ (where M is at least one selected from the group consisting of Co, Ni, Fe, Cr, Zn and Ta, and it satisfies 0.01≤c3≤0.1) or Li₂Mn₃MO₈ (where M is at least one selected from the group consisting of Fe, Co, Ni, Cu and Zn); a lithium nickel cobalt manganese (NCM) composite oxide, a lithium nickel cobalt manganese aluminum (NCMA) composite oxide, and LiMn₂O₄ in which some of Li in the formula are substituted with alkaline earth metal ions, and the like may be used, without being limited thereto.

As the negative electrode active material, a compound capable of reversible intercalation and deintercalation of lithium may be used. A specific example may include a carbonaceous material such as artificial graphite, natural graphite, graphitized carbon fiber, and amorphous carbon; a metallic compound capable of being alloyed with lithium, such as Si, Al, Sn, Pb, Zn, Bi, In, Mg, Ga, Cd, Si alloy, Sn alloy, or Al alloy; a metal oxide capable of doping and un-doping lithium, such as SiOa (0 < a < 2), SnO₂, a vanadium oxide, and a lithium vanadium oxide; or a composite containing the metallic compound and the carbonaceous material, such as a Si-C composite or Sn-C composite, and the like, and any one or a mixture of two or more of the foregoing may be used.

The electrode active material may be present in the slurry in a ratio ranging from about 80 wt% to 99.5 wt%, based on the solid content. In another example, the ratio may be 85 wt% or more, 90 wt% or more, or 95 wt% or more, or may also be 99 wt% or less, or 98 wt% or less or so. The weight ratio is the ratio of the total weight of the solid content in the slurry. Therefore, for example, if the slurry includes a solvent, the ratio is a ratio based on the total weight of the slurry excluding the solvent.

The slurry may further comprise a binder. The binder serves to improve attachment between active materials and adhesion force between the active material layer and the current collector layer. An example of the binder is not particularly limited, where one or more selected from the group consisting of, for example, PVDF (poly(vinylidene fluoride)), PVA (poly(vinyl alcohol)), SBR (styrene butadiene rubber), PEO (poly(ethylene oxide)), CMC (carboxyl methyl cellulose), cellulose acetate, cellulose acetate butylate, cellulose acetate propionate, cyanoethylpullulan, cyanoethyl polyvinyl alcohol, cyanoethyl cellulose, cyanoethyl sucrose, pullulan, polymethylmethacrylate, polybutylacrylate, polyacrylonitrile, polyvinylpyrrolidone, polyvinyl acetate, polyethylene-co-vinyl acetate, and polyarylate may be used

In one example, the binder may be included in an amount of 0.001 parts by weight or more, 0.005 parts by weight or more, 0.01 parts by weight or more, 0.05 parts by weight or more, 0.1 parts by weight or more, 0.5 parts by weight or more, or 1 part by weight or more, relative to 100 parts by weight of the electrode active material. The binder may be included in a ratio of 20 parts by weight or less, 15 parts by weight or less, 10 parts by weight or less, 9 parts by weight or less, 8 parts by weight or less, 7 parts by weight or less, 6 parts by weight or less, 5 parts by weight or less, 4 parts by weight or less, 3 parts by weight or less, 2 parts by weight or less, or 1.5 parts by weight or less. The ratio of the binder may also have a range between any one of the above-described upper limits and any one of the above-described lower limits.

The slurry may further comprise a conductive material, if necessary. As the conductive material, any known material may be used without special limitation if it has conductivity without causing chemical changes in the secondary battery. For example, graphite such as natural graphite or artificial graphite; carbon black such as carbon black, acetylene black, Ketjen black, channel black, furnace black, lamp black or thermal black; conductive fiber such as carbon fiber or metal fiber; conductive tube such as carbon nanotube (CNT); metal powder such as fluorocarbon, aluminum or nickel powder; conductive whisker such as zinc oxide or potassium titanate; conductive metal oxide such as titanium oxide and/or a conductive material such as a polyphenylene derivative, and the like may be used.

If included, the conductive material may be included in the active material layer in an amount of 0.1 parts by weight to 20 parts by weight, or 0.3 parts by weight to 10 parts by weight, relative to 100 parts by weight of the electrode active material, but is not limited thereto.

The type of solvent in the slurry in which such components are dispersed is also not particularly limited. For example, the solvent may be exemplified by water, methanol, ethanol, isopropyl alcohol, acetone, dimethyl sulfoxide, formamide, and/or dimethylformamide, and the like, but is not limited thereto.

The filter device of the present application may be applied to remove foreign substances from a fluid such as the slurry for electrodes as above.

Such a filter device of the present application may comprise a housing providing a space for removing foreign substances from the fluid, and a filter part present inside the housing.

Figure 3 is a diagram for explaining one example of the filter device, and is a diagram when the filter device is viewed from the top. As in Figure 3, the housing of the filter device may comprise an inlet (10) through which the fluid such as the slurry for electrodes is introduced, a space (30) where removal of foreign substances contained in the fluid is performed, and an outlet (20) through which the fluid is discharged.

The filter part may be disposed within the space (30) of such a filter device. The filter part may comprise at least a lid, rod-shaped magnets, and a jig, as described below.

As exemplarily shown in Figure 3, the lid (1000) may be provided in the form of a cover covering the upper part of the space (30), and the rod-shaped magnets (2000), one end of which is fixed to the lid (1000), may be included in the filter part.

At this time, the rod-shaped magnets (2000) may be included in a plurality of filter parts, as shown in the drawing, and may be fixed to the lid (1000) in a state where they are spaced apart from each other at a certain interval when the filter device is observed from the top. The rod-shaped magnets (2000) may be usually fixed to the lid (1000) by welding or bolts, and the like.

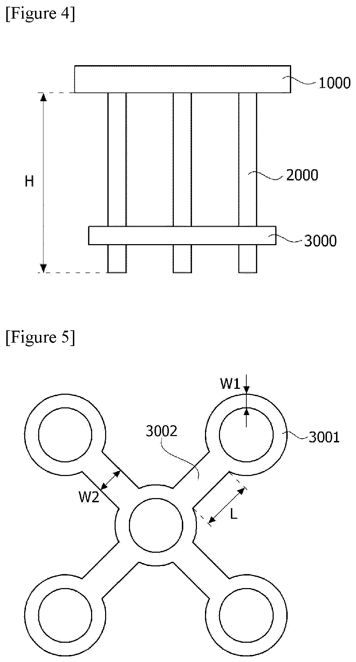

Figure 4 is a diagram showing a case where only the filter part of the filter device is observed from the side.

As in the drawing, in the filter part, one end is fixed to the lid (1000) in a state where the rod-shaped magnets (2000) are spaced apart from each other at an interval.

As an additional component, the filter part of the present application may comprise a jig mounted on the other end (i.e., the end opposite to the end fixed to the lid) of each of the rod-shaped magnets to maintain the interval between the rod-shaped magnets.

In this specification, the jig is a component detachably mounted on the other end of each of the rod-shaped magnets, which is an device serving to maintain the interval between the plurality of rod-shaped magnets.

In the present application, by mounting the jig to the ends of the rod-shaped magnets as above, it is possible to prevent damage such as bending of the rod-shaped magnets during use even when the magnets having a longer length and stronger magnetic force are applied as the rod-shaped magnets. In addition, by applying such a jig to be detachable, it is possible to efficiently perform periodic cleaning or magnet replacement which must be performed on the filter device.

Figure 5 is a diagram in which the rod-shaped magnets (2000) on which the jig is mounted are observed in the end direction where the jig is mounted.

As in the drawing, the jig may comprise a plurality of frames (3001) providing a space that a single rod-shaped magnet (2000) is inserted into or mounted on, and may also comprise a connecting portion (3002) connecting the plurality of frames (3001) to each other. Here, the shape of the frame (3001) and the connecting portion (3002) is not particularly limited, and they may be formed in an appropriate shape considering the arrangement or interval of the rod-shaped magnets.

In the present application, it is possible to apply the magnets having a longer length and stronger magnetic force as the rod-shaped magnets through the application of such a jig.

In one example, the present application may use, as the rod-shaped magnet, a rod-shaped magnet with a length (H in Figure 4) of 200 mm or more. In another example, the length of the rod-shaped magnet may also be 205 mm or more, 210 mm or more, 215 mm or more, 220 mm or more, 225 mm or more, 230 mm or more, 235 mm or more, 240 mm or more, 245 mm or more, 250 mm or more, 255 mm or more, 260 mm or more, or 265 mm or more or so, and the upper limit thereof is not particularly limited, and for example, the length of the rod-shaped magnet may be 600 mm or less, 580 mm or less, 560 mm or less, 540 mm or less, 520 mm or less, 500 mm or less, 480 mm or less, 460 mm or less, 440 mm or less, 420 mm or less, 400 mm or less, 380 mm or less, 360 mm or less, 340 mm or less, 320 mm or less, 300 mm or less, or 280 mm or less or so.

In another example, the rod-shaped magnet may be a rod-shaped magnet exhibiting a magnetic force exceeding 10,000 Gauss. In another example, the magnetic force of the rod-shaped magnet may be 11,000 Gauss or more, 12,000 Gauss or more, 13,000 Gauss or more, or 14,000 Gauss or more or so, and the upper limit thereof is not particularly limited, which may be, for example, 30,000 Gauss or less, 29,000 Gauss or less, 28,000 Gauss or less, 27,000 Gauss or less, 26,000 Gauss or less, 25,000 Gauss or less, 24,000 Gauss or less, 23,000 Gauss or less, 22,000 Gauss or less, 21,000 Gauss or less, 20,000 Gauss or less, 19,000 Gauss or less, 18,000 Gauss or less, 17,000 Gauss or less, 16,000 Gauss or less, or 15,000 Gauss or less or so.

The rod-shaped magnet applied in the present application may be one having any one of the above-described lengths, or may be one exhibiting any one of the above-described magnetic forces, and in one example, it may be a rod-shaped magnet having any one of the above-described lengths and any one of the above-described magnetic forces simultaneously.

Considering that currently applied rod-shaped magnets generally have a length of approximately 134 mm and have a magnetic force of 10,000 Gauss, the above-described lengths and/or magnetic forces are very long and strong compared to the current ones. When such rod-shaped magnets are applied, foreign substances may be removed from the fluid more effectively, but the attractive force or repulsive force acting between the rod-shaped magnets also becomes stronger, so that damage to the filter part, such as bending of the rod-shaped magnets may occur. However, through the application of the jig, the present application may take advantage of the rod-shaped magnets with the longer length and the stronger magnetic force without causing such problems.

In the present application, the rod-shaped magnets having an appropriate cross-sectional area while having a longer length and exhibiting a stronger magnetic force may also be applied.

For example, in the present application, the rod-shaped magnets with a cross-sectional area in a range of 150 mm² to 1500 mm² may be applied. In another example, the cross-sectional area of the rod-shaped magnet may be 200 mm² or more, 250 mm² or more, 300 mm² or more, 350 mm² or more, 400 mm² or more, 450 mm² or more, 500 mm² or more, or 530 mm² or more or so, or may also be 1400 mm² or less, 1300 mm² or less, 1200 mm² or less, 1100 mm² or less, 1000 mm² or less, 900 mm² or less, 800 mm² or less, 700 mm² or less, 600 mm² or less, or 550 mm² or less or so.

In the present application, through the application of the jig, the rod-shaped magnets may be applied to have a longer length and to exhibit a stronger magnetic force, and additionally, the rod-shaped magnets may be arranged so that foreign substances may be removed more efficiently.

For example, in the filter part, the rod-shaped magnets may be arranged so that a ratio (A/I) of the cross-sectional area (A, unit: mm²) of the rod-shaped magnet to the interval (I, unit: mm) between the rod-shaped magnets is in a range of 10 to 100. In another example, such a ratio (A/I) may be 20 or more, 30 or more, 40 or more, or 45 or more or so, and may also be 90 or less, 80 or less, 70 or less, 60 or less, or 50 or less or so.

By arranging the rod-shaped magnets in such a state, it is possible to remove foreign substances from the fluid more efficiently.

Here, the interval between the rod-shaped magnets is not particularly limited if it satisfies the above ratio, but may be, for example, in a range of 5 mm to 30 mm. In another example, the interval may be 7 mm or more, 9 mm or more, or 11 mm or more or so, or may be 25 mm or less, 20 mm or less, or 15 mm or less or so.

For more effective removal of foreign substances, the arrangement of the rod-shaped magnets may be further controlled.

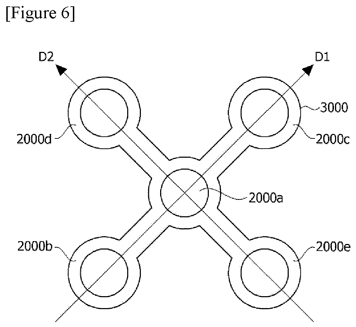

For example, the plurality of rod-shaped magnets may be arranged in the form shown in Figure 6. Figure 6 is a diagram of the rod-shaped magnets when observed from the top. As in the drawing, the plurality of rod-shaped magnets (2000a to 2000e) may be arranged so that some magnets (2000a to 2000c) are arranged at a predetermined interval along an arbitrary first direction (D1), and other magnets (2000a, 2000d, 2000e) are arranged to be arranged at a predetermined interval along a second direction (D2) forming an angle in a range of 80 degrees to 100 degrees with the first direction (D1) while passing through any one of the rod-shaped magnets (2000a to 2000c) arranged along the first direction.

The rod-shaped magnets may be arranged so that the above-described cross-sectional area (A), and the ratio (I) of the cross-sectional area (A) and their interval are secured in the arrangement.

Through this arrangement, it is possible to form a filter part so that foreign substances in the fluid may be removed more efficiently.

Therefore, the shape of the jig (3000) adjusting the interval between the rod-shaped magnets may also be formed according to the arrangement of the rod-shaped magnets.

Referring again to Figure 5, the jig may comprise a plurality of frames (3001) in which the rod-shaped magnets are accommodated, and a connecting portion (3002) connecting the frames (3001) and the frames (3001), as described above.

At this time, the arrangement of the frames (3001) is determined according to the desired arrangement of the rod-shaped magnets, and the frames (3001) thus arranged are connected by the connecting portion (3002).

In such a jig, a ratio (W₂/W₁) of the width (W₁ in Figure 5) of the frame (3001) and the width (W₂ in Figure 5) of the connecting portion (3002) may be, for example, in a range of 1 to 10. In another example, the ratio (W₂/W₁) may be 2 or more, 3 or more, 4 or more, or 5 or more or so, or may also be 9 or less, 8 or less, 7 or less, 6 or less, or 5 or less or so.

Here, the width (W₁ in Figure 5) of the frame (3001) may be, for example, in a range of 0.5mm to 10mm. In another example, the width may be 1 mm or more, 1.5 mm or more, or 2 mm or more or so, or may also be 9 mm or less, 8 mm or less, 7 mm or less, 6 mm or less, 5 mm or less, 4 mm or less, 3 mm or less, or 2 mm or less or so.

In the jig, the length (L in Figure 5) of the connecting portion (3002) may be set in consideration of the desired interval between the rod-shaped magnets. For example, the connecting portion may have a length of approximately 2mm to 30mm. In another example, the length may be 4 mm or more, 6 mm or more, 8 mm or more, or 10 mm or more or so, or may be 25 mm or less, 20 mm or less, 15 mm or less, 14 mm or less, 13 mm or less, 12 mm or less, or 11 mm or less or so.

The thickness of such a jig may be, for example, in a range of 1mm to 10mm. In another example, the ratio (W₂/W₁) may be 2 mm or more, 3 mm or more, 4 mm or more, or 5 mm or more or so, or may also be 9 mm or less, 8 mm or less, 7 mm or less, 6 mm or less, or 5 mm or less or so.

By configuring the jig in such a form, it is possible to prevent interference with the housing, and the like while stably maintaining the interval between the rod-shaped magnets with a longer length ad stronger magnetic force.

Such a jig may be formed from a non-metallic material.

By forming the jig from a non-metallic material, it is possible to prevent the generation of foreign substances due to interference or friction between the rod-shaped magnets or housing and the jig.

The applicable non-metallic material is not particularly limited, and for example, a plastic material, specifically a so-called engineering plastic material, may be applied.

Therefore, the jig may be a plastic jig.

In a suitable example, the jig may be a so-called diamagnetic plastic jig. In this specification, the term diamagnetism is defined as a material having negative magnetic susceptibility at room temperature (about 22°C). Such a diamagnetic plastic exhibits a weak repulsive force against magnetic fields. Therefore, when the jig is made of the diamagnetic material, it exhibits an appropriate repulsive force against the rod-shaped magnets, whereby it may sufficiently perform the role of the jig without interfering with the function of the rod-shaped magnets.

The diamagnetic plastic may be used without limitation if it is a material exhibiting negative magnetic susceptibility at room temperature (about 22°C), and for example, a material exhibiting magnetic susceptibility of approximately -10⁻³ to -10⁻⁷, or -10⁻⁴ to -10⁻⁶ or so at room temperature (about 22°C) may be used.

Among known engineering plastics, polyacetal is a material exhibiting magnetic susceptibility in the above range. Therefore, in one example, the jig may be an acetal jig, that is, a jig made of polyacetal.

The acetal is an engineering plastic also called polyacetal, polyoxymethylene, or polyformaldehyde, and the like, which is a material having a high strength and exhibiting a low frictional force, and in addition, it exhibits the above-mentioned diamagnetic properties, whereby it can more effectively form a jig with the desired effect.

The method of manufacturing a jig in the above-described shape using the material is not particularly limited, where the jig can be manufactured through a known general plastic molding method.

The filter device of the present application may comprise other additional constitutions if it includes the above constitutions, and the specific types of these additional constitutions are not particularly limited, where constitutions introduced in a general filter device may be applied.

The present application also relates to a method of removing foreign substances from a fluid using the filter device.

The method of the present application may be performed in a usual manner, and for example, may be performed through a step of contacting the fluid with the rod-shaped magnets of the filter part inside the housing of the filter device. At this time, in one example, the contact may be performed while moving the fluid, and in one example, the contact may be performed while moving the fluid in a direction approximately perpendicular to the longitudinal direction of the rod-shaped magnets. Here, the approximately perpendicular direction is the case where the angle formed by the longitudinal direction of the rod-shaped magnets and the moving direction of the fluid is in a range of approximately 70 degrees to 110 degrees.

As described above, the fluid may be a slurry for electrodes.

Therefore, the present application may be a method of removing foreign substances, or a method for manufacturing an electrode, in which the fluid is a slurry.

The method for manufacturing the electrode may comprise a step of contacting the electrode slurry with the rod-shaped magnets of the filter part inside the housing of the filter device. At this time, in one example, the contact may be performed while moving the slurry, and in one example, the contact may be performed while moving the slurry in a direction approximately perpendicular to the longitudinal direction of the rod-shaped magnets. Here, the approximately perpendicular direction is the case where the angle formed by the longitudinal direction of the rod-shaped magnets and the moving direction of the slurry is in a range of approximately 70 degrees to 110 degrees.

The method for manufacturing the electrode may be performed according to a usual method for manufacturing an electrode if the step of removing foreign substances using the filter device of the present application is performed. Therefore, the method for manufacturing the electrode may further comprise a step of coating the electrode slurry after contacting the rod-shaped magnets on a current collector, a step of drying the coated layer, and/or a step of rolling the coated layer, and the like, and such a method may be performed in a known manner.

## Claims

1. A filter device, comprising:
a housing configured to provide a space for removing foreign substances from fluid; and
a filter part present inside the housing,
wherein the filter part comprises:
a lid configured to fix a plurality of rod-shaped magnets in a state where they are spaced apart from each other at an interval;
a plurality of rod-shaped magnets, each of the plurality of rod-shaped magnets having one end fixed to the lid; and
a jig detachably mounted on an opposite end of each of the plurality of rod-shaped magnets to maintain the interval between each of the plurality of rod-shaped magnets, wherein
each of the plurality of rod-shaped magnets is at least one of a rod-shaped magnet having a length of 200 mm or more or a rod-shaped magnet exhibiting a magnetic force exceeding 10,000 Gauss, and
the jig is a non-metallic jig.

2. The filter device according to claim 1, wherein the fluid is an electrode slurry.

3. The filter device according to claim 1, wherein the housing comprises:
an inlet that is configured to have the fluid introduced therethrough ; and
an outlet that is configured to have the fluid discharged therethrough.

4. The filter device according to claim 1, wherein each of the plurality of rod-shaped magnets is a rod-shaped magnet having a length of 200 mm or more and exhibiting a magnetic force exceeding 10,000 Gauss .

5. The filter device according to claim 1, wherein each of the plurality of rod-shaped magnets has a cross-sectional area in a range of from 150 mm² to 1500 mm².

6. The filter device according to claim 5, wherein each of the plurality of rod-shaped magnets is arranged such that a ratio of the cross-sectional area of each of the plurality of rod-shaped magnets to the interval between each of the plurality of rod-shaped magnets is in a range of from 10 to 100.

7. The filter device according to claim 1, wherein the interval between each of the plurality of rod-shaped magnets is in a range of from 5 mm to 30 mm.

8. The filter device according to claim 1, wherein the plurality of rod-shaped magnets is arranged so that some rod-shaped magnets are arranged at an interval along a first direction, and other rod-shaped magnets are arranged at an interval along a second direction that forms an angle in a range of from 80 degrees to 100 degrees with the first direction while passing through any one of the rod-shaped magnets arranged at an interval along the first direction.

9. The filter device according to claim 8, wherein the plurality of rod-shaped magnets is arranged so that a cross-sectional area of each of the plurality of rod-shaped magnets is in a range of from 150 mm² to 1500 mm², and
a ratio of the cross-sectional area of each of the plurality of rod-shaped magnets to the interval between each of the plurality of rod-shaped magnets is in a range of from 10 to 100.

10. The filter device according to claim claim 1, wherein the jig is a plastic jig.

11. The filter device according to claim 1, wherein the jig is a diamagnetic plastic jig.

12. The filter device according to claim claim 1, wherein the jig is an acetal jig.

13. A method of removing foreign substances from a fluid using the filter device of claim 1, comprising
contacting the fluid with each of the plurality of rod-shaped magnets.

14. A method for manufacturing an electrode using the filter device of claim 1, comprising
contacting an electrode slurry with each of the plurality of rod-shaped magnets.

15. The method for manufacturing an electrode according to claim 14, comprising coating the electrode slurry on a current collector after contacting the electrode slurry with each of the plurality of rod-shaped magnets.
